# EUROPÄISCHE PATENTSCHRIFT

(11) **EP 0 469 412 B1**
(45) Veröffentlichungstag und Bekanntmachung des Hinweises auf die Patenterteilung: **31.08.1994**
(21) Anmeldenummer: 91112156.4
(22) Anmeldetag: 20.07.1991
(51) Int. Cl.: F16D 3/00, F16C 11/12

(54) **Federgelenk zur schwenkbaren Verbindung zweier Körper**
Flexural pivot for the hinged connection of two pieces
Pivot de flexion pour la liaison articulée de deux pièces

(30) Priorität: 02.08.1990 DE 4024494
(43) Veröffentlichungstag der Anmeldung: 05.02.1992
(73) Patentinhaber: ANSCHÜTZ & CO. GmbH, 24100 Kiel (DE)
(72) Erfinder: Fichtner, Karl-Heinz, W-2307 Strande (DE); Brenner, Kurt, W-7181 Satteldorf Gröningen (DE)
(74) Vertreter: Fey, Hans-Jürgen

(56) Entgegenhaltungen:
- EP-A- 0 015 353
- DE-A- 3 133 289
- FR-A- 2 155 012
- FR-A- 2 391 390
- US-A- 3 479 888
- US-A- 4 479 786
- US-A- 4 812 072

## Beschreibung

Die Erfindung betrifft ein Federgelenk zur schwenkbaren Verbindung zweier Körper, welches zwei Haltekörper besitzt, die durch mindestens einen federnden Körper miteinander verbunden sind.

Federgelenke eignen sich hervorragend zur Herstellung einer schwenkbaren Verbindung zweier Körper, da sie mit einer sehr hohen Reproduzierbarkeit arbeiten. Insbesondere sind Federgelenke bekannt, bei denen mehrere Blattfedern im Inneren von zwei Haltekörpern angeordnet sind. Blattfedern zeichnen sich dadurch aus, daß ihre Federwirkung im wesentlichen nur in einer Ebene vorhanden ist und sie in der zu dieser Ebene senkrechten Richtung eine vernachlässigbare Federwirkung besitzen. Mit ihnen lassen sich damit insbesondere richtkraftbehaftete Federgelenke oder -lager bauen. Derartige Federgelenke dienen im wesentlichen der genauen reibungslosen, spielfreien, hysteresearmen, verschleißfreien und trockenen (radial / axial) Lagerung von Körpern oder Bauteilen, die eine begrenzte Drehfreiheit benötigen und die oft unter extremen Umweltbedingungen (Schmutz, Kälte, Hitze, Vakuum, Vibration, Schock) betrieben werden müssen.

Verbreitete Anwendung finden diese Federgelenke als Lager in Sensoren die z.B. Wege, Winkel, Momente, Kräfte etc. messen und in Meßgeräten, Maschinen, Mikrowagen, Kreiselgeräten (hier insbesondere bei Wendekreiseln und dynamisch abgestimmten Kreiseln als Rahmen bzw. Kardanlagerung) etc. eingebaut sind. Federgelenke der beschriebenen Art sind aus der DE-PS 25 25 530 und DE-PS 26 53 427 bekannt.

Probleme entstehen in der Regel bei der Dimensionierung der Federlager aus den Forderungen an Tragfähigkeit (möglichst hoch) und Drehfederkonstante bzw. Richtkraft, Rückstellkraft (möglichst niedrig).

Die Auslenkung ist immer ein Kompromiß, zumal auftretende Händlings- und Transporterfordernisse (bei Flugkörpern etc.; z.B. der Start) normalerweise eine weit über den eigentlichen Betriebsbedingungen liegende Dimensionierung auf Tragfähigkeit erfordern.

Das führt aber zu unerwünscht steifen, d.h. mit hohen Rückstellkräften, verringerte Drehwinkelfreiheit, größerer Hysterese etc. behafteten Lagern.

Für die meisten Anwendungen ist es zulässig und wichtig, daß für den Zeitraum einer weit über normalen Betriebsbedingungen liegenden zeitlich begrenzten Belastung die Lager unzerstört, evtl. mit "eingeschränkter" Funktion (z.B. nicht reibungsfrei) betrieben werden können, wenn nur danach wieder volle oder geringfügig beeinflußte Funktion gegeben ist.

Aufgabe der Erfindung ist es deshalb dafür zu sorgen, daß die Dimensionierung des Federgelenks insbesondere hinsichtlich der Federkonstanten vorwiegend nach den Erfordernissen der Betriebsbedingungen vorgenommen werden kann und andere, höhere Belastungen von den Federn als Führungselementen eines Federgelenks ferngehalten werden.

Diese Aufgabe wird durch den kennzeichnenden Teil des ersten Patentanspruches gelöst.

Mit der erfindungsgemäßen Lösung ist es nicht mehr zwingend notwendig, eine überdimensionierung eines Federgelenks mit einem federnden Körper in seinem Inneren vorzunehmen, um auch nach evtl. Schockbelastungen (bei Flugkörpern etc.; z.B. der Start) noch ein funktionsfähiges Federgelenk zu haben. Es ist somit möglich, bei der Dimensionierung des Federlagers eine hohe Tragfähigkeit mit einer niedrigen Rückstellkraft (Drehfederkonstanten bzw. Richtkraft) zu realisieren, bei minimalem Platzbedarf für die Anschlagsicherung. Damit entfällt die bisher notwendige Dimensionierung der Federn auf Tragfähigkeit, welche normalerweise zu einer weit über den eigentlichen Betriebsbedingungen liegenden Dimensionierung der Federwirkung führt. Die Erfindung führt zu Federlagern mit nicht unnötig hohen Rückstellkräften, welche durch ihre Steifheit eine verringerte Drehwinkelfreiheit und eine größere Hysterese besitzen würden. Die mit der Anschlagsicherung versehenen Federlager bleiben trotz der geringen Abmessung der Anschlagsicherung bei einer weit über die normale Betriebsbedingung hinausgehenden Belastung unzerstört und können evtl. mit "eingeschränkter" Funktion (z.B. nicht reibungsfrei) betrieben werden. Nach dem Ende der außergewöhnlichen Belastung leisten sie dann wieder ihre bestimmungsgemäße Funktion.

Es ist vorteilhaft, wenn der Anchlagssicherungskörper so gestaltet ist, daß er auch einen Schutz gegen eine axiale Bewegung (senkrecht zur Federwirkung in normaler Funktion) besitzt.

Es ist vorteilhaft, wenn der Haltekörper und der federnde Körper des Federgelenks aus einem Stück gearbeitet sind (monolithische Bauteile). Bei starken Temperaturänderungen ist es vorteilhaft, wenn das monolithische Federgelenk und die Anschlagsicherung aus einem Material sind.

Insbesondere Blattfedern eignen sich als federnde Körper in einem Federgelenk, da ihre Herstellung sehr exakt erfolgen kann.

Um eine lange Lebensdauer des Federgelenks bei öfters auftretenden Überlasten sicherzustellen, ist es vorteilhaft, wenn die Anschläge der Anschlagsicherung so ausgebildet sind, daß sie einen genügend großen Anlagebereich bei Anschlag insbesondere in Federungsrichtung besitzen.

In einer vorteilhaften Ausführungsform der Anschlagsicherung besteht die Anschlagsicherung aus zwei auf das Federgelenk aufgebrachten Ringen, wobei in einem äußeren, größeren Ring ein innerer, kleinerer Ring eingelassen ist. Diese Ringe sind vorteilhafterweise mit den Haltekörpern des Federgelenks (mittelbar oder unmittelbar) verbunden (z.B. mit Schrauben).

Bei einer anderen vorteilhaften Ausführungsform der Erfindung besitzt das Gehäuse des Federgelenks eine äußere Verlängerung, in welche mindestens ein Anschlagkörper eingebracht ist. Dies kann dann auch durch eine lösbare Verbindung erfolgen.

Durch eine Vorspannung des Anschlagkörpers durch eine Feder erreicht man eine weitere Unempfindlichkeit des Federgelenks gegen Stöße. Dabei besitzt die Feder an der dem Anschlagkörper entgegengesetzten Seite einen Begrenzungskörper, der an der äußeren Verlängerung starr befestigt ist.

Die Erfindung wird im folgenden anhand von Ausführungsbeispielen, unter Bezugnahme auf die beiliegenden Figuren näher erläutert.

Es zeigen
- Fig. 1a: einen Torsionsstab;
- Fig. 1b und c: die Wirkung einer translatorischen Verformung im unelastischen Bereich nach einem Schock in seitlicher Ansicht eines Torsionsstabes;
- Fig. 2a: einen Torsionsstab in einer Anschlagsicherung in Grundstellung in seitlicher Ansicht;
- Fig. 2b: einen Torsionsstab beim Anschlag in seitlicher Ansicht;
- Fig. 2c: eine Frontalansicht von Fig. 2a;
- Fig. 2d: eine Frontalansicht von Fig. 2b;
- Fig. 3a: ein erstes monolithisches Blattfederlager ohne Anschlagsicherung;
- Fig. 3b: das Federlager aus Fig. 3a im Schnitt mit Anschlagsicherung;
- Fig. 3c: das Federlager aus Fig. 3b in seitlicher Ansicht;
- Fig. 3d: eine Frontalansicht auf das Blattfederlager aus Fig. 3a mit montiertem ersten Anschlagring;
- Fig. 3e: eine Frontalansicht auf das Blattfederlager aus Fig. 3a mit beiden montierten Anschlagringen;
- Fig. 4a: ein zweites monolithisches Blattfederlager ohne Anschlagsicherung in Schrägansicht mit seitlichem Aufschnitt;
- Fig. 4b: das Blattfederlager aus Fig. 4a mit eingeschweißten Anschlagkörpern;
- Fig. 4c: das Blattfederlager aus Fig. 4b in vertikalem Schnitt;
- Fig. 4d: das Blattfederlager aus Fig. 4a mit eingeschraubtem Anschlagkörper;
- Fig. 4e: das Blattfederlager aus Fig. 4a mit modifiziertem Anschlagkörper im Schnitt;
- Fig. 4f: das Blattfederlager aus Fig. 4e in Frontalansicht;
- Fig. 4g: das Blattfederlager aus Fig. 4a mit federvorgespanntem Anschlagkörper;
- Fig. 5: die Federkennlinie bei starrem Anschlag;
- Fig. 6: die Federkennlinie bei federvorgespanntem Anschlag.

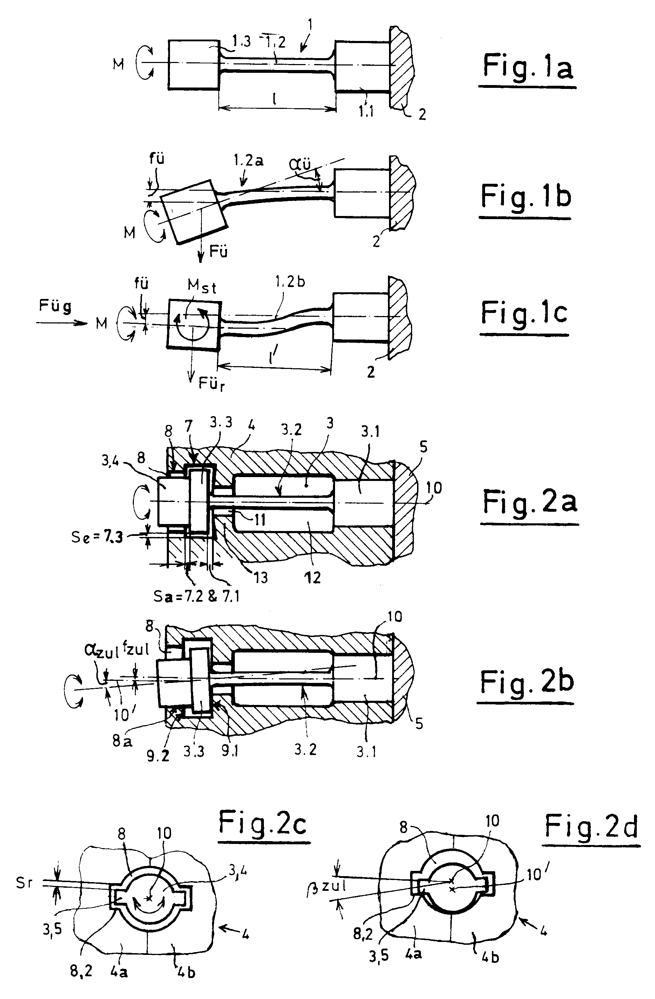

An einem in den Figuren 1a - c und 2a - d dargestellten einfachen Torsionsstab (1, 3) als Federgelenk kann man die Problematik und den Grundlösungsgedanken am einfachsten verstehen.

Der Torsionsstab (1) besteht aus zwei Haltekörpern (1.1, 1.3), welche durch einen dünnen, federnden Stab (1.2) miteinander verbunden sind. Um eine sichere Verbindung des hier runden Stabes (1.2) an die Haltekörper (1.1, 1.3) zu erhalten, ist der Stab (1.2) an den Verbindungspunkten verdickt ausgeführt. Ein Haltekörper (1.1) ist starr an einer stabilen Basis (2) befestigt. Indem man an den zweiten Haltekörper (1.3) nun ein Bauteil (hier nicht eingezeichnet, da zur Erläuterung nicht notwendig) anbringt, erhält man ein richtkraftbehaftetes (Torsionsfeder-) Lager. Dieses dient der genauen reibungslosen, spielfreien, hysteresearmen, verschleißfreien und trockenen (radial / axial) Lagerung des Bauteils und bietet eine begrenzte Drehfähigkeit. Diese Art der Lagerung bietet sich überall dort an, wo eine Betreibung unter extremen Umweltbedingungen (Schutz, Kälte, Hitze, Vakuum, Vibration, Schock) erfolgt. Bei der Belastung des Torsionsstabes können dabei Drehmomente M auftreten.

Wird der Torsionsstab (1) über den zulässigen Bereich ausgelenkt, so erfolgt keine Rückstellung nach der Auslenkung in die Ausgangslage. Vielmehr verbleibt eine Restauslenkung fü mit dem Winkel αü des Stabes (1.2a). Außerdem kann eine verbleibende Verdrehung des Stabes (1.2a) erfolgen, so daß das Bauteil relativ zur Basis (2) nicht mehr seine ursprüngliche Lage einnehmen kann, wenn die auslenkende Belastung des Torsionsstabes (1) nicht mehr vorhanden ist. Die Überlast Für hat dann zu einer dauerhaften Deformierung des Torsionsstabes (1) geführt. Auch eine in der Längsachse des Torsionsstabes (1) angreifende Kraft Füg vom Bauteil in Richtung auf die Basis (2) oder zu große Störmomente M_{St} führen ab einer bestimmten Belastung zu einer Deformation des Stabes (1.2b), welche sich dann bei Entlastung des Stabes (1.2b) in einer verkürzten Entfernung l' der Haltekörper (1.1, 1.3) zueinander bemerkbar macht. Des weiteren kann eine verbleibende Restauslenkung fü auftreten, welche zumeist mit einer verbleibenden relativen Rotation des Bauteils relativ zur Basis (2) einhergeht. Die verbleibende Wirkung nach der Belastung ist dann dieselbe, als ob eine Überlast Für dauernd an den Haltekörper (1.3) des Bauteils angreift.

Um Auslenkungen des Torsionsstabes (1, 3) über den zulässigen Bereich hinaus zu vermeiden, muß man den Bewegungsbereich des Torsionsstabes (1, 3) begrenzen. Wie dies erfolgen kann, ist in den Fig. 2a - d zu sehen.

Der Torsionsstab (3) besteht aus zwei Haltekörpern (3.1, 3.4), welche über einen dünneren, federnden Stab (3.2) miteinander verbunden sind. Der runde Stab (3.2) ist wie in Fig. 1a - c an seinen Enden verdickt ausgeführt. Einer der beiden Haltekörper (3.1) ist starr an einer Basis (5) befestigt. Dieser Haltekörper (3.1) hat wie die Haltekörper (1.1, 1.3) aus Fig. 1a - c eine glatte, zylindrische Form. Dagegen weist der Haltekörper (3.4) für das Bauteil eine Verdickung (3.3) in dem Bereich des Haltekörpers (3.4) auf, welcher mit dem Stab (3.2) verbunden ist.

Umgeben ist der Torsionsstab (3) von einer Anschlagsicherung (4). Diese Anschlagsicherung (4) ist fest und starr mit dem Haltekörper (3.1) des Torsionsstabes (3) verbunden, welcher an der Basis (5) befestigt ist. Da die äußere Form der Anschlagsicherung (4) für deren Funktionsweise unerheblich ist, sind die äußeren Konturen der Anschlagsicherung (4) nicht eingezeichnet; die äußere Form kann sich ganz nach den konstruktiven Gegebenheiten in der konstruktiven Umgebung des Torsionsstabes (3) richten. Es ist lediglich darauf zu achten, daß die Anschlagsicherung (4) die auftretenden Kräfte bei der Benutzung aushalten kann. Dies ist insbesondere auch bei der Befestigung des Halteelementes (3.1) an der Basis (5) zu beachten.

Die Anschlagsicherung (4) hat im Bereich um den Stab (3.2) des Torsionsstabes (3) eine Öffnung (12). Diese Öffnung (12) muß groß genug sein, um eine freie Bewegung des Stabes (3.2) bei allen zulässigen Bewegungen sicherzustellen.

Im Bereich vor der Verdickung (3.3) des Haltekörpers (3.4) für das Bauteil hat die Öffnung (12) eine Einengung (11). Diese Einengung (11) ist so lang, daß die Anschlagsicherung (4) über eine stabile Anlage (13) für die Verdickung (3.3) des Haltekörpers (3.4) bei einer axialen Überlastung verfügt. Die Einengung (11) geht um die Verdickung (3.3) des Haltekörpers (3.4) in eine größere Öffnung (7) über. Diese Öffnung (7) verjüngt sich dann zu einer schmaleren Austrittsöffnung (8). Die Austrittsöffnung (8) ist dabei so gestaltet, daß sie auch eine gewisse, zulässige Rotation des Torsionsstabes (3) um dessen Grundachse (10) zuläßt.

Zwischen der Verdickung (3.3) des Haltekörpers (3.4) und den Wänden nm die Öffnung (7) müssen genügend große Luftspalte Se und Sa (7.1, 7.2, 7.3) vorhanden sein, um eine ungestörte Bewegung des Torsionsstabes (3) im erlaubten Bereich zu ermöglichen. Der Luftspalt Se (7.3) ist entsprechend dem Bewegungsbereich des Haltekörpers (3.4) für das Bauteil so zu dimensionieren, daß der Haltekörper (3.4) bei maximaler Auslenkung um die Grundachse (10) sich störungsfrei an die Wand (8a) der Austrittsöffnung (8) anlehnen kann. Diese Anlehnung sollte möglichst nicht punktförmig sein; deshalb ist die Austrittsöffnung (8) zum Bauelement hin leicht vergrößert. Dies ermöglicht eine linienförmige Anlage des Haltekörpers (3.4) an die Wand (8a) der Austrittsöffnung (8), was eine längere Betriebsdauer der Wand (8a) als Anlagefläche gewährleistet.

Die Luftspalte Sa (7.1, 7.2) hingegen müssen so bemessen sein, daß einerseits die freie Bewegung des Torsionsstabes (3) sichergestellt ist und andererseits eine Anlagefläche (9.1, 9.2) eine Auslenkung des Torsionsstabes (3) bei einer axialen Belastung in Richtung auf die Basis (Stoß) als auch in Richtung auf das Bauteil (Zug) in den unzulässigen Bereich verhindert wird.

Durch die Begrenzung der Bewegungsfreiheit des Torsionsstabes (3) sowohl in axialer Richtung als auch in dazu näherungsweise senkrechter Richtung wird sichergestellt, daß der Torsionsstab (3) auch nach einer überbelastung seine Funktion sicher erfüllen kann. Die maximal zulässigen Auslenkungen fzul und die maximal zulässigen Winkel αzul, βzul werden dabei nicht überschritten und nur eine zulässige Auslenkachse (10') erreicht.

Das Material des Torsionsstabes legt zusammen mit dessen geometrischer Auslegung die maximal zulässigen Bewegungsräume fest. Dies Material, wie auch das Material der Anschlagsicherung bestehen vorteilhafterweise aus miteinander verträglichem Material; z.B. Federstahl / Sonderbronze, um insbesondere ungleiche Dehnungen, Prellungen und Abrieb zu minimieren.

In den Fig. 2c und 2d ist die in den Fig. 2a und 2b dargestellte Anordnung frontal dargestellt. Auf die Zeichnung des Bauteils wurde aus darstellungstechnischen Gründen in allen Zeichnungen verzichtet.

In Fig. 2c ist zu sehen, daß die Anschlagsicherung (4) aus zwei Teilen (4a, 4b) besteht. Nachdem der Torsionsstab (3) sich in der Anschlagsicherung (4) befindet, werden die beiden Teile (4a, 4b) miteinander fest verbunden. In der Frontalansicht ist zu sehen, daß der Haltekörper (3.4) des Bauteils an einer Stelle zwei rechteckige Verlängerungen (3.5) besitzt, welche rotationssymmetrisch zur Grundachse (10) angeordnet sind. Diese rechteckigen Verlängerungen (3.5) greifen in eine korrespondierende Aussparung der Anschlagsicherung (4). Bei einer Drehung des Haltekörpers (3.4) um seine Grundachse (10) erfolgt ein Anschlag der Verlängerung (3.5) an die begrenzende Wand der Aussparung, wenn der zulässige Drehwinkel βzul erreicht ist. Bei der Dimensionierung der Aussparung hinsichtlich des Luftspaltes St (8.2) (St = Spalt für Tangentialanschlag) zwischen der Verlängerung (3.5) und den seitlichen Wänden der Aussparung und deren Ausgestaltung muß aber auch darauf geachtet werden, daß die freie seitliche Bewegung des Haltekörpers (3.4) nicht behindert wird.

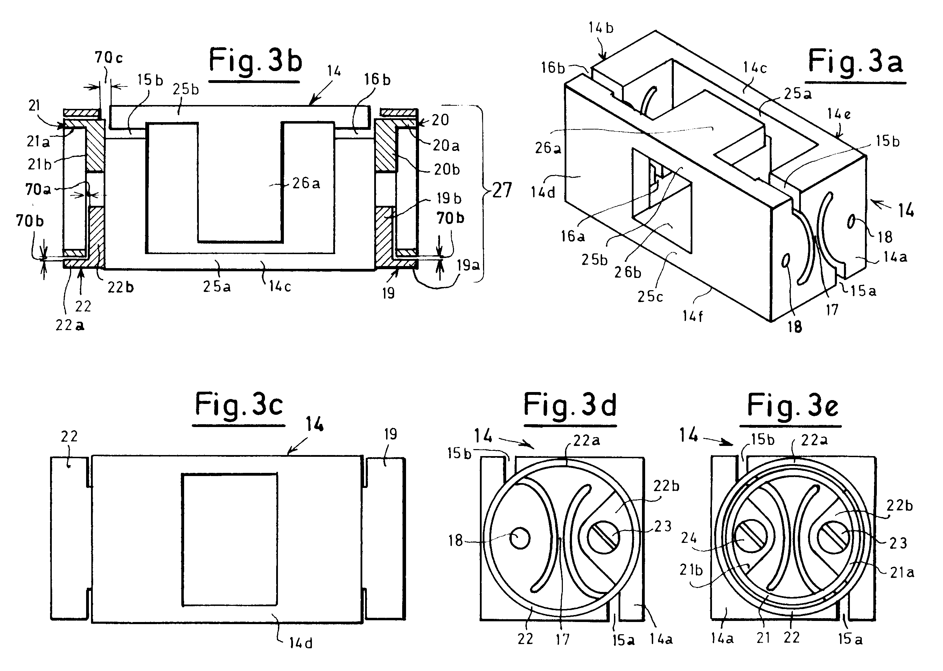

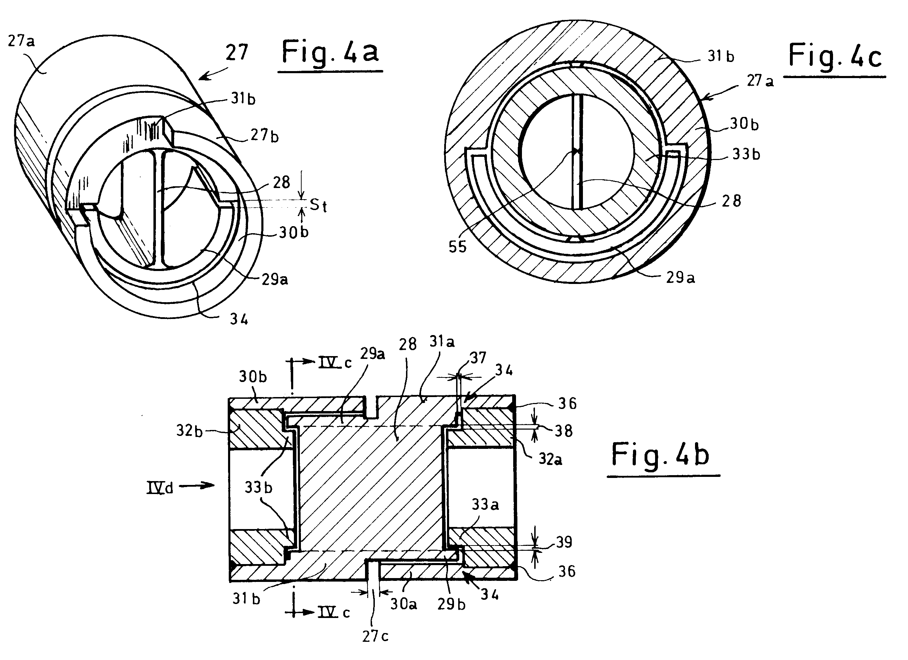

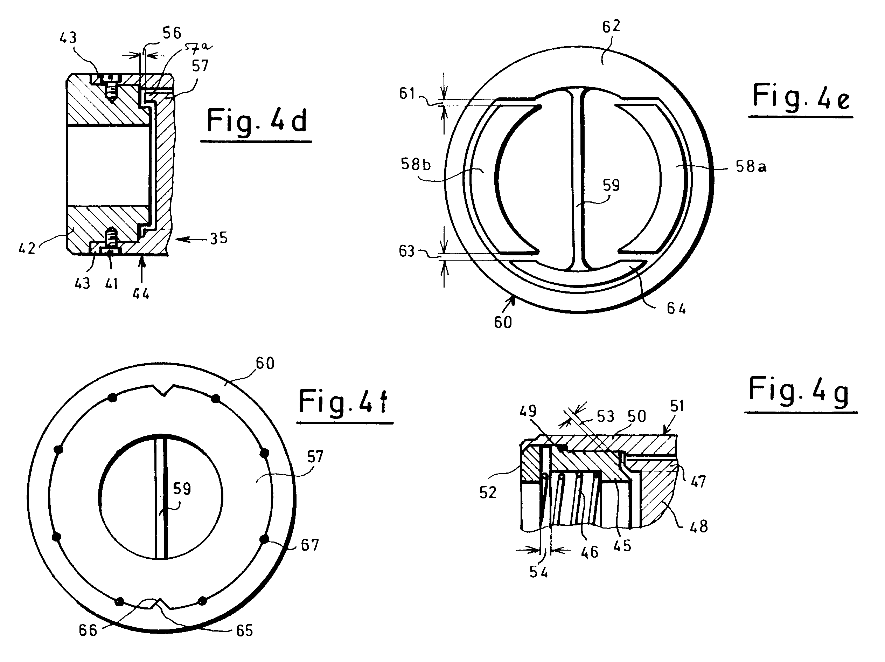

In den nun folgenden Fig. 3a - e und den Fig. 4a - g sollen ausgehend von dem in Fig. 2a - d dargestellten Erfindungsgedanken zwei weitere Ausführungsformen beschrieben werden.

In dem in Fig. 3a - e dargestellten Federlager (14) sind zwei Blattfedern (17) in einem monolithischen Bauteil zusammengefaßt. In der Fig. 3a ist dieses Federlager (14) aus Übersichtsgründen noch ohne eine Anschlagsicherung (27) dargestellt.

Das Federlager (14) besteht aus einen Quader, welcher zwei quadratische Stirnflächen (14a, 14b) und vier rechteckige Seitenflächen (14c, d, e, f) besitzt. In seinem Inneren ist dieser Quader weitgehend hohl. Die Verbindungen zwischen den beiden quadratischen Stirnflächen (14a, 14b) erfolgt durch vier quaderförmigen Verbindungskörpern (nur 25a, b, c in dieser perspektivischen Ansicht sichtbar), an denen sich zwei Laschen (26a, b) befinden.

In den Stirnflächen (14a, b) des Federlagers (14) befinden sich jeweils zwei Einschnitte (15a, b und 16a, b). Diese Einschnitte (15a, b und 16a, b) beginnen seitlich der Stirnflächen (14a, b) und gehen nach einem kurzen, parallel zur seitlichen Stirnflächenbegrenzungslinie gehenden Verlauf in einen Bogen über. Die Einschnitte (15a, b und 16a, b) einer Stirnfläche (14a, b) beginnen auf gegenüberliegenden Seiten und sind zur Mittellinie einmal nach links und einmal nach rechts um denselben Abstand versetzt.

Durch diese Anordnung und Gestaltung der Einschnitte (15a, b und 16a, b) ergibt sich zwischen den jeweils zwei Einschnitten (15a, b und 16a, b) einer Stirnfläche (14a, b) einer Verjüngung, die als (eingeschnürte) Blattfeder (17) wirkt. Der kreisbogenförmige Verlauf der Bluttfeder (17) ist dabei lediglich als eine fertigungstechnisch günstige Form anzusehen und der Verlauf der Blattfeder (17) könnte bei einem anderen Beispiel durchaus anders sein. Die Blattfeder (17) ist zum Rand hin verdickt ausgeführt und besitzt somit in axialer und radialer Richtung eine bessere Tragfähigkeit. Sie wird auch als Kreisbogenfeder (15b, 16b gegenüberliegend, gleiche Seite) bezeichnet. Die beiden Federn (17) des Federlagers (14) haben dieselbe Orientierung hinsichtlich ihrer Federwirkung und besitzen dieselbe Federkraft (im Rahmen der fertigungstechnischen Genauigkeit). Das monolithische Federlager (14) besteht aus einem geeigneten Material, z.B. Federstahl.

Außer den jeweils zwei Einschnitten (15a, b und 16a, b) befinden sich auf den beiden Stirnflächen (14a, b) des Federlagers (14) noch zwei Gewindebohrungen (18), an welche mittels Schrauben (23, 24) die Anschlagsicherung (27) befestigt wird. In Fig. 3b ist das Federlager (14) mit bereits montierter Anschlagsicherung (27) dargestellt, wobei die zu beiden Seiten angebrachten Anschlagsicherungen (27) zur Verdeutlichung ihrer Funktionsweise im Schnitt dargestellt sind.

Die Anschlagsicherung (27) besteht im wesentlichen aus zwei ringförmigen Körpern (20, 19 und 21, 22) mit Befestigungslaschen (19b, 20b und 21b, 22b), die jeweils entlang einer Seite der Blattfeder (17) senkrecht zur transversalen Federwirkung der Feder (17) angebracht sind. Die beiden ringförmigen Körper (19, 20 und 21, 22) sind so zueinander angeordnet, daß ein äußerer ringförmiger Körper (19, 22) einen innerern ringförmigen Körper (20, 21) konzentrisch umschließt. Der innere ringförmige Körper (20, 21) ist dabei so aufgebaut, daß sein Anschlagring (20a, 21a) auf der der Feder (17) abgewandten Seite mit dem äußeren Anschlagring (19a, 22a) abschließt. Dagegen ist der Anschlagring (20a, 21a) des inneren ringförmigen Körpers (20, 21) auf der der Feder (17) zugewandten Seite in dem Bereich außerhalb seiner Befestigungslasche (20b, 21b) soweit angehoben, daß der Anschlagring (20a, 21a) nicht an der Befestigungslasche (19b, 22b) des äußeren ringförmigen Körpers (19, 22) anstößt, wenn die Feder (17) eine Auslenkung im erlaubten Bereich macht. Mit dem Abstand (70b) zwischen dem äußeren Anschlagring (19a, 22a) und dem inneren Anschlagring (20a, 21a) wird der erlaubte radiale Auslenkbereich (≙ Sr) in der Feder (17) begrenzt.

Die Abstände (70a-b) zwischen der Anschlagsicherung und dem Federlager (14) sowie dem äußeren ringförmigen Körper (19, 22) und dem inneren ringförmigen Körper (20, 21) müssen dabei so bemessen sein, daß die Bewegungen der Feder (17) auf den zulässigen Bereich, in welchem keine dauerhafte Deformierung der Feder auftritt, begrenzt werden. Dagegen hat der Abstand (70c) keine Anschlagfunktion.

In den Fig. 3d und 3e wird die Montage der Anschlagsicherung (27) gezeigt. Zuerst wird der äußere ringförmige Körper (22) mit Anschlagring (22a) an seiner Befestigungslasche (22b) durch eine Schraube (23) fest mit dem Federlager (14) verbunden. Die Gewindebohrungen (18) für die Schrauben (23, 24) sind dabei senkrecht zur Ausdehnung der Blattfeder (17) angeordnet, um eine maximale Bewegung der beiden Anschlagringe (22a, 21a) zueinander bei einer Auslenkung der Feder (17) zu erhalten.

Nachdem der äußere ringförmige Körper (22) auf der Stirnseite (14a) des Federlagers (14) befestigt ist, wird innerhalb seines Anschlagringes (22a) der innere ringförmige Körper (21) an seiner Befestigungslasche (21b) durch eine Schraube (24) in die vorhandene Gewindebohrung (18) fest an der Stirnseite (14a) des Federlagers (14) befestigt. Bei dieser Montage muß darauf geachtet werden, daß der Abstand zwischen dem äußeren und dem inneren Anschlagring (21a, 22a) entlang des Umfanges gleich groß ist.

Nach der Montage der Anschlagsicherung (27) ist die Feder (17) des Federlagers (14) nun gegen radiale Auslenkungen in den unzulässigen Bereich geschützt. Aber auch ein Schutz gegen axiale Stöße ist vorhanden, da bei einem axialen Stoß der innere Anschlagring (21a) gegen die Befestigungslasche (22b) des äußeren ringförmigen Körpers (22) stößt. Je nachdem, wie häufig oder intensiv solche axialen Überlastungen sind, kann auch die konstruktive Gestaltung des inneren Anschlagringes (21a) diesen Umstand Rechnung tragen. Dazu wird der innere Anschlagring (21a) so in Richtung auf die Stirnfläche (14a) des Federlagers (14) verlängert, daß der Anschlagring (21a) bei einer axialen Überlastung auf die Stirnfläche (14a) des Federlagers (14) aufliegt. Lediglich im Bereich der Befestigungslasche (22b) des äußeren ringförmigen Körpers (22) und in dem für die erlaubte Bewegung der Feder (17) notwendigen Bereich um diese Befestigungslasche (22b) verbleibt es bei einer verkürzten Ausdehnung des inneren Anschlagringes (21a) senkrecht zur Stirnfläche (14a) des Federlagers (14), und es kommt zu einem Aufliegen des inneren Anschlagringes (21a) auf die Befestigungslasche (22b) des äußeren ringförmigen Körpers (22).

Entsprechend der in den Fig. 3d und 3e dargestellten Montage erfolgt dann die Montage der zweiten Anschlagsicherung (27) auf der anderen Stirnseite (14b) des Federlagers (14).

Das in Fig. 4a - c dargestellte monolithische Federgelenk (27) hat eine gerade, kreiszylindrische Form. Als Material eignen sich bevorzugt hochwertige Federwerkstoffe.

Das Federgelenk (27) besteht aus zwei Haltekörpern (27a, 27b) mit ebenfalls gerader, kreiszylindrischer Form, welche entlang der gemeinsamen Normalen der Kreisoberflächen hintereinander mit einem gewissem Abstand (27c) angeordnet sind. Zwischen den beiden Haltekörpern (27a, 27b) befindet sich in deren inneren Hohlraum eine Blattfeder (28) als verbindendes Element.

Jede der beiden Haltekörper (27a, 27b) hat einseitig eine verdünnte Verlängerung (29a, 29b) auf einem Abschnitt des Kreisumfanges. Diese Verlängerung (29a, 29b) reicht in den inneren Hohlraum des anderen Haltekörpers (27b, 27a) hinein. Die Verlängerungen (33a, 33b) des Anschlagsicherungskörpers (32a, 32b) dürfen nur so lang sein, daß zwischen ihnen und der Blattfeder (28) in eingedrehtem Endzustand des Anschlagsicherungskörpers (32a, 32b) immer noch ein Sicherheitsspalt (39) existiert.

Außerdem muß der äußere Durchmesser der Verlängerungen (33a, 33b) des Anschlagsicherungskörpers (32a, 32b) kleiner sein als der innere Durchmesser zwischen der Verlängerung (29a, 29b) und einer Verdickung (31a, 31b) der beiden Haltekörper (27a, 27b). Die Verlängerung (29a, 29b) geht an ihrem hinteren Teil aus der Verdickung (31a, 31b) des Haltekörpers (27a, 27b) hervor. Sowohl die Verdickung (31a, 31b) als auch die Verlängerung (29a, 29b) besitzen eine zur Zylinderachse (55) ausgerichtete Oberfläche, welche zumindestens teilweise eine nach außen gerichtete Wölbung besitzen.

Die Blattfeder (28) ist in dem inneren Hohlraum der beiden Haltekörper (27a, 27b) sowohl an den Verlängerungen (29a, 29b) als auch an den Verdickungen (31a, 31b) beider Haltekörper (27a, 27b) befestigt, wobei sich die Blattfeder (28) entlang ihrer Verbindungslinie zur Sicherstellung einer guten Befestigung verdickt. Fertigungstechnisch gesehen ist sie aus einem massiven Materialblock herausgearbeitet. Dabei reicht die Blattfeder (28) nicht ganz bis zu den Enden der Verlängerungen (29a, 29b) und der Verdickungen (31a, 31b) der beiden Haltekörper (27a, 27b), sondern endet ein Stück vorher. In dem Bereich seitlich und unterhalb der Befestigung der Blattfeder (28) verjüngen sich die Verdickungen (31a, 31b) der beiden Haltekörper (27a, 27b) zu einem relativ schmalen Kreiszylinderring (30a, 30b). Der Spalt St definiert einen Verdrehungsanschlag, welcher zur Momentenbegrenzung dient. Damit möglichst nur Kräftepaare wirken und keine Einzelkräfte auftreten, ist eine symmetrische Ausbildung des Spaltes St zu beiden Seiten der Blattfeder (28) notwendig.

Fig. 4a zeigt das Federgelenk (27) noch ohne Anschlagsicherung. Die Anschlagsicherungskörper (32a, 32b) sind in den Fig. 4b und 4d zu sehen. Jeweils ein Anschlagsicherungskörper (32a, 32b) der Anschlagsicherung ist zu beiden Seiten der Blattfeder (28) im Inneren der beiden Haltekörper (27a, 27b) angebracht.

Der Anschlagsicherungskörper (32a, 32b) hat die Form eines Kreiszylinders, welcher eine äußere ringförmige Materialverdünnung in Form eines kreisförmigen Aufsatzes (33a, 33b) besitzt. In die Verlängerungen (29a, 29b) der Haltekörper (27a, 27b) wird jeweils ein Anschlagsicherungskörper (32a, 32b) spielfrei eingesteckt, um axiale Stöße von beiden Seiten des Federgelenks (27) sicher abfangen zu können. Dann wird der Anschlagsicherungskörper (32a, 32b) an den Verlängerungen (29a, 29b) durch Schweißpunkte (36) in seiner Lage fixiert.

Damit der Anschlagsicherungskörper (32a, 32b) seine Aufgabe erfüllen kann, muß er in seiner fixierten Lage einen gewissen Abstand (37) insbesondere zur Verlängerung (29a, 29b) des Haltekörpers (27a, 27b) haben. Um diesen Abstand (37) zur Begrenzung der axialen Federbewegung sicherzustellen, besitzen die Verlängerungen (29a, 29b) der Haltekörper (27a, 27b) in ihrem Inneren einen Anschlag (34), bis zu welchem der Anschlagsicherungskörper (32a, 32b) in eine Verlängerung (29a, 29b) hineingeschoben wird. Es muß aber auch ein genügend großer Abstand (38) zwischen dem Anschlagsicherungskörper (32a, 32b) und den Verlängerungen (29a, 29b) und den Verdickungen (31a, 31b) der Haltekörper (27a, 27b) vorhanden sein, damit der radiale Bewegungsraum der Blattfeder (28) nicht schon vor dem gewünschten Anschlag der Verlängerung (29a, 29b) des Haltekörpers (27a, 27b) an den Anschlagsicherungskörper (32a, 32b) begrenzt wird.

Anstatt den Anschlagsicherungskörper (32a, 32b) mit Schweißpunkten (36) fest an den Verlängerungen (29a, 29b) der Haltekörper (27a, 27b) zu fixieren, wie in den Fig. 4a - c dargestellt, kann die Befestigung auch lösbar erfolgen. Dazu können mehrere in die Verlängerungen (43) des Federgelenks (44) eingelassene Schrauben (41) in Gewindebohrungen im Anschlagsicherungskörper (42) greifen, wie dies in Fig. 4d dargestellt ist. Dadurch wird es möglich, den Abstand (56) zwischen dem Anschlagsicherungskörper (42) und der Verlängerung (57a) des Haltekörpers (35) durch Austausch verschiedener Anschlagsicherungskörper (42) mit unterschiedlicher Länge in Richtung der Zylinderachse in gewisse Grenzen zu verändern. Es kann aber auch der Anschlagsicherungskörper selbst mit einem Außengewinde versehen werden, welche mit einem Innengewinde in den Verlängerungen der Haltekörper korrespondieren, da rotationssymmetrische Verhältnisse vorliegen. Aber auch alle anderen Befestigungsarten, welche einen festen Sitz des Anschlagsicherungskörper in dem Haltekörper sicherstellen, sind genausogut verwendbar.

Eine Orientierung des Anschlagsicherungskörpers (32a, 32b; 42) in den Fig. 4a - d ist nicht notwendig, wenn der Anschlagsicherungskörper (32a, 32b; 42) die Blattfeder (28) lediglich gegen axiale Stöße entlang der Zylinderachse (55) und axiale Stöße senkrecht zur durch die Blattfeder (28) aufgespannten Ebene abfangen soll. Diese Orientierung wird aber dann notwendig, wenn der Anschlagsicherungskörper (57) kreisförmige Aufsätze (58a, 58b) hat, die den Bewegungsspielraum der Feder (59) in normaler Federbewegungsrichtung begrenzen soll. Dies tut der in Fig. 4e und 4f dargestellte Anschlagsicherungskörper (57). Dieser Anschlagsicherungskörper (57) muß mit einer definierten Orientierung in den Haltekörper (60) eingeschoben werden. Um eine Orientierung des Anschlagsicherungskörpers (57) bei der Montage relativ zur Feder (59) zu erhalten, besitzen die Verlängerungen der Haltekörper (60) Führungsschienen (65), welche in entsprechende Aussparungen (66) des Anschlagsicherungskörpers (57) greifen (siehe Fig. 4f). Bei der Dimensionierung der Aufsätze (58a, 58b) kommt es nicht auf den Abstand (61) zwischen der Verdickung (62) des Haltekörpers (60) und den Aufsätzen (58a, 58b) an. Dieser Abstand (61) kann frei gewählt werden.

Relevant ist einzig und allein zusätzlich zu den schon beschriebenen Abständen in den Fig. 4a - c der Abstand (63) zwischen den Aufsätzen (58a, 58b) des Anschlagsicherungskörpers (57) und der Verlängerung (64) des Haltekörpers (60). Dieser Abstand (63) legt den freien Bewegungsspielraum der Blattfeder (59) fest. Nachdem der Anschlagsicherungskörper (57) bis zu den Anschlägen (beschrieben in den Fig. 4a - c) im Inneren der Verlängerungen hineingeschoben wurden, wird seine Lage durch Schweißpunkte (67) fixiert.

In Fig. 4g ist eine andere Variante einer Anschlagsicherung gezeigt, welche eine Vergrößerung des zulässigen Bereiches der Federkennlinie erlaubt. Bei dieser Anschlagsicherung wird der Anschlagsicherungskörper (45) durch eine Andrückfeder (46) in Richtung auf die Verlängerung (47) zur Befestigung der Blattfeder (48) in eine festgelegte Position gedrückt.

Die Bewegung des Anschlagsicherungskörpers (45) in Richtung auf die Blattfeder (48) wird durch einen Anschlag (49) in der Verlängerung (50) des Haltekörpers (51) begrenzt. Die Andrückfeder (46), welche sich gegen einen an der Verlängerung (50) des Haltekörpers (51) befestigten Begrenzungskörper (52) abstützt, drückt im belastfreien Zustand den Anschlagsicherungskörper (45) sicher gegen den Anschlag (49). Bei einer Bewegung der Blattfeder (48) kann sich diese erst frei bewegen. Nachdem die Blattfeder (48) durch ihre Bewegung erreicht hat, daß die Verlängerung (47) die Distanz (53) bis zum Anschlagsicherungskörper (45) überbrückt hat, erfolgen die weiteren Bewegungen gegen die Blattfeder (48) und die Andrückfeder (46) zusammen. Dazu müssen die sich gegenüberliegenden Flächen des Anschlagsicherungskörpers (45) und des Begrenzungskörpers (52) einen gewissen Abstand (54) zueinander haben.

Bei der Realisation dieser Variante in Fig. 4g ist zu beachten, daß der erlaubte Begrenzungsbereich der Blattfeder (48) nun in zwei Bereiche aufgeteilt wird. Im ersten Bereich erfolgt die Bewegung der Blattfeder (48) ungestört von dem Anschlagsicherungskörper (45). Dagegen liegt die Verlängerung (47) zur Befestigung der Blattfeder (48) im zweiten Bereich fest am Anschlagsicherungskörper (45) an und die Bewegung der Blattfeder (48) erfolgt zusammen mit der Bewegung des Anschlagsicherungskörpers (45), bis auch der Abstand (54) zum Begrenzungskörper (52) überwunden ist. Die Gesamtbewegung der Blattfeder (48) ist dabei nicht größer als die Bewegung der Blattfeder (28) in den Fig. 4a - 4c oder auch 4e.

Je nachdem, ob durch den Anschlagsicherungskörper ein starrer oder ein federvorgespannter Anschlag erfolgt, erhält man andere Federkennlinien für die Blattfeder.

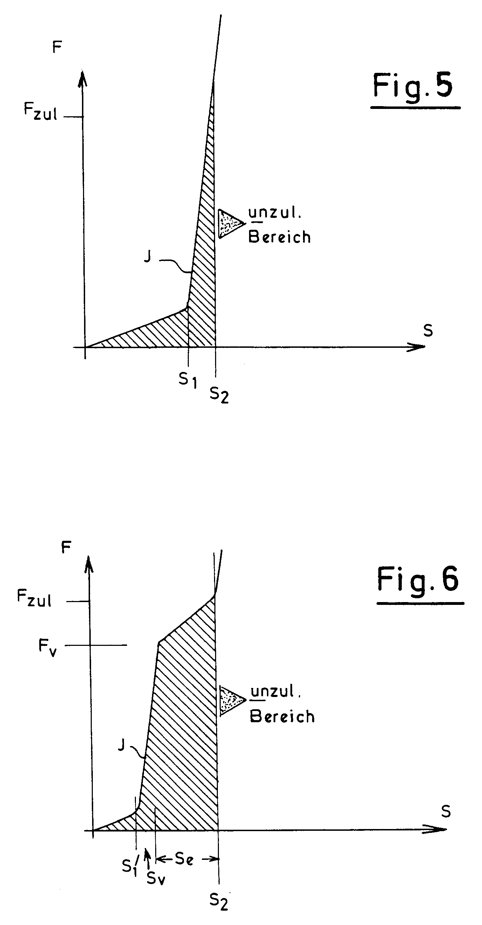

In Fig. 5 ist die Federkennlinie gezeigt, die man einem starren Anschlag erhält. Auf der Ordinatenachse ist dabei die Kraft eingezeichnet, welche auf die Feder einwirkt. Auf der Abzissenachse kann man dann ablesen, bei welcher Kraft die Feder welche Bewegung macht. Wie in der Fig. 5 zu sehen, herrscht in einem ersten Bereich bis zu S1 eine annähernd lineare Beziehung zwischen der Federbewegung und der dazu notwendigen Kraft. Nachdem die Feder den Weg S1 zurückgelegt hat, liegt sie an dem Anschlag an. Erst eine sehr viel größere Kraft (> fzul) vermag dann die Feder in den unzulässigen Bereich (S > S2) zu bewegen und somit die Feder zu zerstören. Durch den relativ großen Begrenzungsspalt (S1) ist der Energiegehalt J relativ klein. Dies kann bei kurzen Stößen unvorteilhaft sein.

Anders sieht es aus, wenn der Anschlag federvorgespannt ist. Hier ist der Begrenzungsspalt (S1') relativ klein. Liegt die Feder nach einer relativ kleinen Bewegung mit einer linearen Beziehung zwischen dem Federweg S und der dazugehörigen Kraft F an dem Anschlag an, steigt die notwendige Kraft F für eine nur geringe Bewegung der Feder steil an. Erst wenn die Blattfeder die Kraft der Anschlagfeder auf dem Anschlagsicherungskörper aufheben kann, endet dieser steile Bereich Sv bei Fv. Danach folgt dann bis zur Grenze S2 des zulässigen Bereiches wieder ein relativ linearer, flacher Anstieg der Federkennlinie. Hier erfolgt die Bewegung der Feder gemeinsam mit der Anschlagfeder. Ist die zulässige Auslenkung S2 erfolgt, so liegt der Anschlagsicherungskörper am Begrenzungskörper an. Jede weitere Bewegung der Feder erfolgt nun gegen sie allein, führt aber auch zu einer bleibenden Deformation.

Der Bereich der Federkennlinie im unzulässigen Bereich ist aus den genannten Gründen nun wieder steiler und die Steigung der Federkennlinie entspricht wieder der Steigung der Federkennlinie bei starrem Anschlag.

Reicht der relativ kleine Begrenzungsspalt (S1') für die Funktion des Federgelenkes aus, so sorgt der federvorgespannte Anschlag dafür, daß ein sehr viel größerer Energieinhalt J benötigt wird, um die Feder in den unzulässigen Bereich zu treiben und damit zu zerstören. Diese Bauweise der Federsicherung ist somit immer dann sinnvoll und vorteilhaft, wenn es um eine möglichst große Energieinhaltsvernichtung, wie sie bei einem kurzzeitig auftretenden Schock notwendig ist, ankommt.

## Patentansprüche

1. Federgelenk zur schwenkbaren Verbindung zweier Körper, bestehend aus zwei Haltekörpern, die durch mindestens ein federndes Element miteinander verbunden sind, dadurch gekennzeichnet, daß für mindestens einen der Haltekörper (3.4; 14a, b; 27a, b; 51; 35) eine Anschlagsicherung in Form von mindestens einem Anschlagsicherungskörper (32a, b; 4; 27; 57; 45) vorgesehen ist, der den Bewegungsbereich des federnden Elementes (28; 1.2; 3.2; 17; 59; 48) bei Belastung auf dessen elastischen Bereich begrenzt.

2. Federgelenk nach Anspruch 1, dadurch gekennzeichnet, daß der Anschlagsicherungskörper (45) entgegen der Bewegungsrichtung des federnden Elementes (48) federnd vorgespannt ist.

3. Federgelenk nach Anspruch 1, dadurch gekennzeichnet, daß ein fester Anschlag für den Anschlagsicherungskörper (45) vorgesehen ist, der den gesamten Bewegungsbereich des federnden Elementes (48) auf dessen elastischen Bereich begrenzt.

4. Federgelenk nach Anspruch 1, 2 oder 3, dadurch gekennzeichnet, daß die Haltekörper (27a, b; 3.4; 14a, b; 51; 35) und mindestens ein federndes Element (28; 1.2; 3.2; 17; 59; 48) des Federgelenks (27; 1; 3; 14; 44; 60) aus einem Stück gearbeitet sind.

5. Federgelenk nach einem der Ansprüche 1 - 4, dadurch gekennzeichnet, daß zwischen zwei Haltekörpern (27a, b; 3.4; 14a, b; 51; 35) das federnde Element (28; 1.2; 3.2; 17; 59; 48) eine Blattfeder ist.

6. Federgelenk nach einem der Ansprüche 1 - 5, dadurch gekennzeichnet, daß die Anschläge des Anschlagsicherungskörpers (32a, b; 4; 27; 57; 45) so ausgebildet sind, daß sie einen möglichst großen Anlagebereich bei Anschlag insbesondere in Federungsrichtung besitzen.

7. Federgelenk nach einem der Ansprüche 1 - 6, dadurch gekennzeichnet, daß die Anschlagsicherung (27) aus zwei auf das Federgelenk (14) angebrachten Ringen (19, 20; 21, 22) besteht, wobei in einem äußeren größeren Ring (19, 22) ein innerer kleinerer Ring (20, 21) eingelassen ist.

8. Federgelenk nach einem der Ansprüche 1 - 7, dadurch gekennzeichnet, daß die Ringe (19, 20; 21, 22) an den Haltekörpern (14a, b) des Federgelenks (14) angeschraubt sind.

9. Federgelenk nach einem der Ansprüche 1 - 8, dadurch gekennzeichnet, daß die Haltekörper (27a, b; 35; 51; 60) des Federgelenks (27) eine äußere Verlängerung (29a, b; 57a; 64, 47) besitzt, in welche mindestens ein Anschlagsicherungskörper (32a, b; 42, 57, 45) eingebracht wird.

10. Federgelenk nach Anspruch 9, dadurch gekennzeichnet, daß der Anschlagsicherungskörper (42) in die äußere Verlängerung (43) eingeschraubt ist.

## Claims

1. Spring joint for pivotably connecting two holding bodies, consisting of two holding bodies, connected with not less than one resilient member, characterised in that for not less than one of the holding bodies (3.4, 14a, b; 27a, b; 51; 35) there is a stop means having at least a stop body (32a, b; 4; 27; 57; 45), to restrict the movement of the residient member (28; 1.2; 3.2; 17; 59; 43) in use in the elastic range.

2. Spring joint of claim 1, said stop body means (45) is biased in the opposit direction of the direction of movement of the resilient member (48).

3. Spring joint of claim 1, said stop body means (45) having a fixed stop for limiting the movement of said resilient member (48) so as to prevent said elastic range from being exceeded.

4. Spring joint of claim 1,2 or 4, said holding bodies (3.4, 14a, b; 27a, b; 51; 35) and not less than one resilient member (28; 1.2; 3.2; 17; 59; 43) of the spring joint (27; 1; 3; 14; 44; 60) being machined from a single piece of material.

5. Spring joint according one of the claims 1 - 4, said resilient member (28; 1.2; 3.2; 17; 59; 43) being a leaf spring between the two holding bodies (3.4, 14a, b; 27a, b; 51; 35).

6. The spring joint according one of the claims 1 - 5, said stop body (32a, b; 4; 27; 57; 45) having contact regions as larger as possible for receiving thereagainst especialy in the direction of the resilient means.

7. The spring joint of claim 1, said stop means (27) consist of two rings (19, 20; 21, 22) mounted on said resilient means (14); whereby inside a bigger outside arranged ring (19, 22) there is a smaler central ring (20, 21) having a smaler diameter than the outside ring (19, 22).

8. Spring joint according one of the claims 1 - 7, further comprising threaded fastener means for fastening said rings (19, 20; 21, 22) to respective ones of said holding bodies (14a, b) of said spring joint (14).

9. Spring joint according one of the claims 1 - 8, the holding bodies (27a, b; 51; 35; 60) of the spring joint (27) having an external extension (29a, b; 57a; 64; 47) for accommodating the corresponding one of said stop bodies (32a, b; 42; 57; 45) therein.

10. Spring joint of claim 9, further comprising thread means for engaging the stop body (42) in the extension corresponding (43) thereto.

## Revendications

1. Articulation à ressort pour relier deux corps avec possibilité de pivotement, constitués par deux corps de fixation, qui sont reliés entre eux par au moins un élément élastique, caractérisée par le fait que pour au moins l'un des corps de retenue (3.4; 14a,b; 27a,b; 51; 35) il est prévu un système de blocage en butée se présentant sous la forme d'au moins un corps de blocage en butée (32a, b; 4; 27; 57; 45) qui limite la gamme de déplacement de l'élément élastique (28; 1.2; 3.2; 17; 59; 48) dans sa gamme élastique, lors de l'application d'une charge.

2. Articulation à ressort selon la revendication 1, caractérisée en ce que le corps de blocage en butée (45) est précontraint élastiquement dans un sens opposé au sens de déplacement de l'élément élastique (48).

3. Articulation à ressort selon la revendication 1, caractérisée par le fait qu'il est prévu, pour le corps de blocage en butée (45), une butée fixe, qui limite l'ensemble de la gamme de déplacement de l'élément élastique (48) à sa gamme élastique.

4. Articulation à ressort selon la revendication 1, 2 ou 3, caractérisée en ce que les corps de retenue (27a, b; 3.4; 14a, b; 51; 35) et au moins un élément élastique (28; 1.2; 3.2; 17; 59; 43) de l'articulation à ressort (27; 1; 3; 14; 44; 60) sont usinés d'un seul tenant.

5. Articulation à ressort selon l'une des revendications 1-4, caractérisée en ce que l'élément élastique (28; 1.2; 3.2; 17; 59; 48) situé entre deux corps de retenue (27a, b; 3.4; 14a, b; 51; 35) est un ressort à lame.

6. Articulation à ressort selon l'une des revendications 1-5, caractérisée en ce que les butées du corps de blocage en butée (32a, b; 4; 27; 57; 45) sont réalisées de manière à posséder une zone d'application aussi étendue que possible en butée, notamment dans la direction de débattement élastique.

7. Articulation à ressort selon l'une des revendications 1-6, caractérisée en ce que le dispositif de blocage en butée (27) est constitué de deux bagues (19, 20; 21, 22), qui sont montées sur l'articulation à ressort (14), une bague intérieure plus petite (20, 21) étant insérée dans une bague extérieure plus grande (19, 22).

8. Articulation à ressort selon l'une des revendications 1-7, caractérisée par le riait que les bagues (19,20; 21,22) sont vissées sur les corps de retenue (14a, b) de l'articulation à ressort (14).

9. Articulation à ressort selon l'une des revendications 1-8, caractérisée par le fait que les corps de retenue (27a, b; 35; 51; 60) de l'articulation à ressort (27) possèdent un prolongement extérieur (29a, b; 57a; 64, 47), dans lequel est vissé au moins un corps de blocage en butée (32a, b; 42; 57; 45).

10. Articulation à ressort suivant la revendication 9, caractérisée par le fait que le corps de blocage en butée (42) est vissé dans le prolongement extérieur (43).
